# EUROPÄISCHE PATENTSCHRIFT

(11) **EP 2 315 292 B1**
(45) Veröffentlichungstag und Bekanntmachung des Hinweises auf die Patenterteilung: **16.04.2014**
(21) Anmeldenummer: 09173479.8
(22) Anmeldetag: 20.10.2009
(51) Int. Cl.: H01M 2/02, H01M 10/42, H01M 10/48, H01M 2/20, H01M 10/052

(54) **Kontrollmodul zur Abdeckung einer Elektrochemischen Batteriezelle, und Batteriesystem mit einem solchen Modul**
Control module for serving as cover for an electrochemical battery cell, and battery system with such module
Module de régulation pour servir de couverture à une cellule de la pile électrochimique et système de batterie avec ce module

(43) Veröffentlichungstag der Anmeldung: 27.04.2011
(73) Patentinhaber: IPS Integrated Power Solutions AG, 2501 Biel (CH)
(72) Erfinder: Vezzini, Andrea, 3274, Merzligen (CH); Christ, Markus, 2505, Biel (CH)
(74) Vertreter: Cohausz & Florack

(56) Entgegenhaltungen:
- EP-A1- 1 868 274
- EP-A2- 1 973 180
- WO-A2-2009/016491
- DE-A1- 19 545 833
- DE-A1- 19 810 746
- US-A1- 2005 287 400
- US-A1- 2006 057 458
- US-A1- 2009 140 870

## Beschreibung

Die vorliegende Erfindung betrifft ein Modul, ein System, und ein Verfahren für eine elektrochemische Batteriezelle.

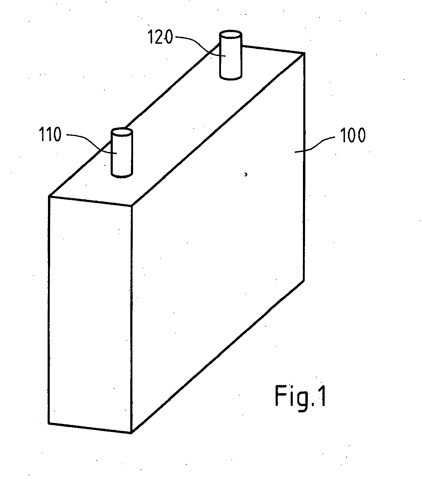

Elektrochemische Batteriezellen, wie z.B. Lithium-Ionen Batteriezellen, werden häufig bei mobilen elektrischen Verbrauchern eingesetzt, wobei eine Batterie eine Vielzahl von Batteriezellen umfassen kann. Figur 1 zeigt exemplarisch solch eine elektrochemische Batteriezelle 100, welche einen ersten Endableiter 110 und einen zweiten Endableiter 120 umfasst.

Es ist bekannt, dass die Lebensdauer von Lithium-Ionen Batterien leidet, wenn die Lithium-Ionen Batterien während des Betriebs höheren Temperaturen ausgesetzt sind. Neben der Batteriezellentemperatur der einzelnen Batteriezellen stellt auch die Batteriezellenspannung der einzelnen Batteriezellen eine wichtige Größe zum effizienten Betreiben von Lithium-Ionen Batterien dar.

Die europäische Patentanmeldung EP 1 973 180 A2 offenbart eine Schutzschaltung, welche in einem Modul zur Abdeckung einer Elektrochemischenbatteriezelle angeordnet ist. Diese Schutzschaltung überwacht die Gesamtkondition der Batteriezelle und speichert hierbei Informationen, wie Spannung, Strom, Temperatur und die in der Batterie gespeicherte Energie ab.

Die europäische Patentanmeldung EP 1 868 274 A1 offenbart eine Batterieschutzschaltung, welche Anschlüsse aufweist, so dass diese Batterieschutzschaltung an entsprechende Anschlüsse einer Batteriezelle festgeschweißt werden kann.

Die US Patentanmeldung US 2006/0057458 A1 offenbart ein Batteriepack, welches eine gedruckte Leiterplatte umfasst, welche eine Batteriesicherheitsschaltkreis umfasst und der in einer Ausnahme eine Abdeckung für die Batterie angeordnet ist und mit positiven und negativen elektrischen Kontakten verbunden ist, wobei diese Abdeckung mit einer weiteren Kappe versiegelt wird, welche auch die Kappe und die gedruckte Leiterplatte aufgebracht wird.

Die US Patentanmeldung US 2005/0287400 A1 offenbart eine Batterie, welche in einem Gehäuse angeordnet ist, wobei auf dem oberen offenen Ende des Gehäuses eine Kappenanordnung angebracht ist, um das Gehäuse zu verschließen, und wobei eine Schutzschaltung oberhalb der Kappenanordnung zum Schutz der Batterie angebracht ist.

Die deutsche Offenlegungsschrift DE 195 45 833 A1 offenbart eine Batterie mit mehreren hintereinander geschalteten Einzelzellen, die über eine Stromleitung miteinander verbunden sind und denen jeweils ein Einzelzellen-Modul zugeordnet ist. Das Einzelzellenmodul umfasst eine Leiterplatte, auf der alle Bauteile des Einzelzellenmoduls angeordnet sind, wobei die Leiterplatte zwei Löcher besitzt, die den Abstand und den Durchmesser der Einzelzellenanschlüsse besitzen.

Die deutsche Offenlegungsschrift DE 198 10 746 A1 offenbart eine Platine mit einer Schaltung zur Überwachung einer mehrzelligen Akkumulatorenbatterie, deren Zellen und Polanschlüsse sich in einer Ebene befinden.

Die zuvor hergeleitete und aus dem Stand der Technik aufgezeigte Aufgabe wird mit einem Modul gemäss Anspruch 1 zur Abdeckung einer elektrochemischen Batteriezelle gelöst. Das Modul umfasst eine erste Ausformung zur Aufnahme eines ersten Endableiters der Batteriezelle, eine zweite Ausformung zur Aufnahme eines zweiten Endableiters der Batteriezelle, Mittel zum Abgreifen der Batteriezellenspannung, und einen Temperatursensor zur Ermittlung der Batteriezellentemperatur wobei die erste und zweite Ausformung derartig ausgebildet sind, dass sich das Modul auf die beiden Endableiter durch Aufstecken oder Aufschieben anbringen lässt, und wobei die erste und zweite Ausformung derartig ausgebildet sind, dass sie jeweils eine Durchführung zum Durchführen des ersten bzw. zweiten Endableiters darstellen, wenn das Modul auf der Batteriezelle angebracht ist, wobei das Modul eine erste und eine zweite Platte umfasst, welche jeweils Ausnehmungen zur Ausbildung der ersten und zweiten Ausformung umfassen, und wobei die Mittel zum Abgreifen der Batteriezellenspannung und der Temperatursensor zwischen der ersten und der zweiten Platte angeordnet sind, und wobei die Mittel zum Abgreifen der Batteriezellenspannung einen ersten elektrischen Kontakt und einen zweiten elektrischen Kontakt umfassen, welche jeweils der ersten und der zweiten Ausformung zugeordnet sind, und wobei die Ausnehmungen in der zweiten Platte eine derartige Größe aufweisen, dass der erste und zweite elektrische Kontakt von der zweiten Platte nicht vollständig verdeckt wird.

Ferner wird die Aufgabe durch ein Batteriesystem gelöst, welches mindestens eine elektrochemische Batteriezelle umfasst, wobei jede der mindestens einen Batteriezelle einen ersten Endableiter und einen zweiten Endableiter umfasst, und welches mindestens eins des zuvor genannten Moduls umfasst, wobei jeweils ein Modul des mindestens einen Moduls auf einer Batteriezelle der mindestens einen Batteriezelle derart angeordnet ist, dass die erste Ausformung des jeweiligen Moduls den ersten Endableiter der entsprechenden Batteriezelle aufnimmt und die zweite Ausformung des jeweiligen Moduls den zweiten Endableiter der entsprechenden Batteriezelle aufnimmt.

Ferner wird die Aufgabe durch ein System, umfassend das vorstehend erläuterte Batteriesystem und eine Verarbeitungseinheit, gelöst. Die Verarbeitungseinheit ist mit dem mindestens einem Modul des mindestens einen Moduls verbunden und ist dazu eingerichtet, Batteriezelleninformationen, welche Information über die Temperatur und Information über die Batteriezellenspannung der jeweiligen Batteriezelle des mindestens einen Moduls des mindestens einen Moduls umfassen, zu empfangen. Beispielsweise kann das Verfahren, welches die Verarbeitungseinheit ausführt, in einer Software beschrieben sein, welche in einem Speicher der Verarbeitungseinheit gespeichert ist und von einem Prozessor der Verarbeitungseinheit ausgeführt wird. Die Verarbeitungseinheit kann beispielsweise ein Mikrocontroller sein.

Ferner wird die Aufgabe gemäß einem Gegenstand durch ein Verfahren zum Betrieb des vorstehend genannten Batteriesystems gelöst. Das Verfahren umfasst das Ermitteln der Batteriezellenspannung und der Batteriezellentemperatur von mindestens einer Batteriezelle der mindestens einen Batteriezelle auf Grundlage einer Spannung, die an den Mitteln zum Abgreifen der Batteriezellenspannung des jeweiligen Moduls anliegt, und auf Grundlage eines Signals des Temperatursensors des jeweiligen Moduls.

Die elektrochemische Batteriezelle kann beispielsweise eine Akkumulatorbatteriezelle darstellen, wie z.B. eine Lithium-Ionen Akkumulatorbatteriezelle oder dergleichen. Der erste und zweite Endableiter der Batteriezelle können beispielsweise Batteriezellenpole darstellen. Diese können beispielsweise stabförmig aus der Batteriezelle herausragen und dabei parallel zueinander angeordnet sein.

Die erste und zweite Ausformung des Moduls sind derart ausgebildet, dass sich das Modul als Batteriezellendeckel auf die beiden Endableiter durch Aufstecken oder Aufschieben auf die Endableiter einer elektrochemischen Batteriezelle anbringen lässt..

Durch die erste und zweite Ausformung lässt sich das Modul sehr einfach auf dem Deckel einer Batteriezelle anbringen, wobei das Modul als Deckel für diese Batteriezelle wirkt und somit einen verbesserten Schutz der Batteriezelle gewährleisten kann. Somit kann eine mechanische Adaption des Moduls auf dem Kopf einer Batteriezelle erfolgen. Das Modul kann beispielsweise aus Kunststoff geformt sein.

Der Deckel der Batteriezelle und das Modul können somit ein integrales Bestandteil bilden, wenn das Modul auf der Batteriezelle angebracht ist, wobei Teile des Deckels der Batteriezellen in dem Modul integriert sind. Diese Teile umfassen mindestens den ersten und zweiten Endableiter der Batteriezelle, es können aber auch noch weitere Teile des Deckels der Batteriezelle in dem Modul integriert sein, wenn dieses auf der Batteriezelle angebracht ist. Es können ferner Mittel zur Fixierung des Moduls auf der Batteriezelle vorgesehen sein, wie z.B. eine Schraubverbindung, eine Steckverbindung oder anderweitige geeignete Mittel. Durch diese Fixierung des Moduls kann das Modul beispielsweise integraler Bestandteil des Batteriezellengehäuses werden. Beispielsweise kann das Modul bei der Endmontage einer Batteriezelle derart auf der Zelle montiert werden, dass es nicht mehr von der Zelle getrennt werden kann. Somit kann beispielsweise ein Schutz vor Fälschungen erzielt werden.

Des Weiteren kann der Temperatursensor, wenn sich das Modul auf der Batteriezelle befindet, zur Messung der Temperatur der Batteriezelle verwendet werden, da sich in diesem Zustand das Modul und somit auch der Temperatursensor in räumlicher Nähe zur Batteriezelle befinden.

Der Temperatursensor kann beispielsweise einen PTC- oder NTC-Widerstand umfassen, es kann aber auch ein anderer Typ von Temperatursensor verwendet werden. Beispielsweise kann der Temperatursensor derart in bzw. an dem Modul angeordnet sein, dass der Temperatursensor beim Anbringen des Moduls auf der Batteriezelle in direkten Kontakt mit der Oberfläche der Batteriezelle gebracht wird. Es können jedoch auch andere geeignete Anordnungen des Temperatursensors vorgenommen werden.

Die Mittel zum Abgreifen der Batteriezellenspannung können beispielsweise einen ersten elektrischen Kontakt und einen zweiten elektrischen Kontakt umfassen, welche jeweils der ersten und der zweiten Ausformung zugeordnet sind. Dieser erste und zweite elektrische Kontakt können dazu eingerichtet, einen elektrischen Kontakt mit dem jeweiligen Endableiter einer Batteriezelle herzustellen, wenn diese Endableiter in der ersten bzw. zweiten Ausformung des Moduls aufgenommen sind. Somit können diese Mittel zum Abgreifen der Batteriezellenspannung zur Ermittlung der Batteriezellenspannung verwendet werden, wenn sich das Modul auf einer Batteriezelle befindet.

Das Modul kann daher Informationen über die ermittelte Batteriezellentemperatur und die über die Batteriezellenspannung bereitstellen, wenn sich das Modul auf einer Batteriezelle befindet. Diese Informationen können beispielsweise zur Information über den Batterie- und Ladezustand der Batteriezelle verwendet werden. Ferner können diese Informationen an ein Batteriemanagement-System weitergeleitet werden und dort beispielsweise für einen verbesserten Ladevorgang mitberücksichtigt werden.

Dieses Batteriesystem kann ein Batteriezellengefäß umfassen und ein Gitterelement zur Anordnung der Batteriezellen umfassen. Die mindestens eine Batteriezelle kann beispielsweise mit Hilfe dieses Gitterelements in dem Batteriezellengefäß positioniert werden.

Das Modul kann eine derartige Form aufweisen, dass die Form eines Moduls mit der Form des Gitterelements und/oder mit der Form des Batteriezellengefäßes zusammenwirkt und so die Positionierung und mechanische Fixierung eines Moduls und der jeweiligen zugeordneten Batteriezelle in dem Gitterelement und dem Batteriezellengefäß gewährleistet. Beispielsweise kann das Modul Mittel zur Fixierung des Moduls an dem Gitterelement und/oder dem Batteriezellengefäß aufweisen.

Die mindestens eine Batteriezelle kann beispielsweise eine Vielzahl von Batteriezellen darstellen, welche beispielsweise mit Stromschienen elektrisch verbunden werden, z.B. in Reihen- oder Parallelschaltung oder einer Kombination hiervon. Somit kann die Vielzahl von Batteriezellen zu einer Gesamtbatterie zusammengeschaltet werden.

Das Batteriezellengefäß zusammen mit der mindestens einen Batteriezelle kann beispielsweise für Hybridkraftfahrzeuge, elektrisch betriebene Fahrzeuge wie z.B. Flurförderfahrzeuge, elektrische Fahrräder, elektrische Rollstühle oder dergleichen verwendet werden.

Somit ermöglichen die Module, die auf den Batteriezellen angeordnet sind, eine Überwachung der Batteriezellentemperatur und der Batteriezellenspannung jeder einzelnen Batteriezelle der mindestens einen Batteriezellen.

Des Weiteren kann das Batteriesystem eine Vielzahl von elektrochemischen Batteriezellen umfassen, wobei auf jeder der elektrochemischen Batteriezelle ein Modul zur Abdeckung der entsprechenden Batteriezelle angeordnet ist. Beispielsweise kann das Batteriesystem ein Batteriegehäuse umfassen, in welchem die Vielzahl von Batteriezellen platzierbar sind und wobei die jeweiligen auf den Batteriezellen angebrachten Module einen integralen Bestandteil des Batteriegehäuses darstellen, wenn die mit den Modulen versehenen Batteriezellen in dem Batteriegehäuse angeordnet sind.

Beispielsweise kann somit bei der Endmontage einer Batteriezelle das Modul auf der Batteriezelle angebracht werden und die Batteriezelle in dem Batteriegehäuse angeordnet werden, so dass das Modul ein integraler Bestandteil des Batteriegehäuses wird. Das Modul kann derart angebracht sein, dass es nicht mehr von der Batteriezelle getrennt werden kann. Somit kann beispielsweise ein Schutz vor Fälschungen erzielt werden.

Eine Ausgestaltung des Gegenstands sieht vor, dass das Modul Mittel zur Identifikation und/oder Speichermitteln umfasst.

Beispielsweise können diese Mittel zur Identifikation eine elektronische Identifikationsnummer darstellen, die in dem Modul gespeichert ist. Z.B. kann diese Identifikationsnummer in Form eines integrierten Schaltkreises in dem Modul integriert sein, so dass die Identifikationsnummer beispielsweise ausgelesen werden kann, allerdings nicht verändert werden kann. Somit kann diese Identifikationsnummer der entsprechenden Batteriezelle zugeordnet werden, wenn das Modul auf der Batteriezelle angebracht ist.

Ferner kann das Modul auch eine Speichereinheit umfassen. Diese Speichereinheit kann beispielsweise zum Speichern und Auslesen von Daten eingerichtet sein, wobei diese Daten beispielsweise statische und/oder dynamische Batteriekenndaten umfassen können.

Somit kann das Modul dazu eingerichtet sein, die elektronische Identifikationsnummer und/oder die in der Speichereinheit gespeicherten Daten zu der Verarbeitungseinheit zu senden.

Ferner kann die Verarbeitungseinheit dazu eingerichtet sein, neben der Information über die Temperatur und der Information über die Batteriezellenspannung auch die elektronische Identifikation und/oder die Daten von dem mindestens einem Modul des mindestens einen Moduls zu empfangen. Die Verarbeitungseinheit kann auch Speichermittel aufweisen, so dass die von einem Modul empfangenen Daten bzw. Informationen abgespeichert werden können.

Des weiteren kann die Verarbeitungseinheit dazu eingerichtet sein, Daten zu einem Modul des mindestens einen Moduls zu senden, wobei jedes Modul dazu eingerichtet sein kann, empfangene Daten in den Speichermitteln abzuspeichern.

Eine Ausgestaltung des Gegenstands sieht vor, dass die Mittel zum Abgreifen der Batteriezellenspannung und der Sensor in dem Modul integriert sind.

Somit kann ein besonders guter Schutz der Mittel zum Abgreifen der Batteriezellenspannung und des Temperatursensors erreicht werden. Beispielsweise kann das Modul ein verschweißtes oder verklebtes Gehäuse darstellen, wobei die Mittel zum Abgreifen der Batteriezellenspannung und der Sensor in dem Gehäuse positioniert sind. Beispielsweise kann das Modul ein Spritzgussteil darstellen, in welchem die Mittel zum Abgreifen der Batteriezellenspannung und der Temperatursensor eingespritzt sind.

Die Mittel zum Abgreifen der Batteriezellenspannung umfassen einen ersten elektrischen Kontakt und einen zweiten elektrischen Kontakt, welche jeweils der ersten und der zweiten Ausformung zugeordnet sind.

Die elektrischen Kontakte können beispielsweise jeweils ein Federelement aufweisen, welches einen elektrischen Kontakt zum jeweiligen Endableiter der Batteriezelle herstellen, wenn sich der jeweilige Endableiter in der entsprechenden Ausformung befindet. Es können jedoch auch andere elektrische Kontakt verwendet werden.

Eine Ausgestaltung des Gegenstands sieht vor, dass die erste Ausformung den ersten elektrischen Kontakt umfasst und der erste elektrische Kontakt derart geformt ist, dass er den ersten Endableiter umgibt, wenn sich das Modul auf der Batteriezelle befindet, und wobei die zweite Ausformung den zweiten elektrischen Kontakt umfasst und der zweite elektrische Kontakt derart geformt ist, dass er den zweiten Endableiter umgibt, wenn sich das Modul auf der Batteriezelle befindet.

Beispielsweise können der erste und der zweite elektrische Kontakt ringförmig ausgebildet sein, wobei der Innendurchmesser des jeweiligen elektrischen Kontakts in etwa dem Durchmesser eines Endableiters der Batteriezelle entspricht, so dass sich der jeweilige Endableiter durch den jeweiligen elektrischen Kontakt schieben lässt. Der erste und der zweite elektrische Kontakt können jedoch auch andere Formen aufweisen, wobei diese andere Formen derart gewählt werden können, dass sie zum Umgeben des ersten bzw. Endableiters einer Batteriezelle geeignet sind. Die Form eines Endableiters ist nicht auf eine Stabform mit kreisförmigem Querschnitt beschränkt, sondern kann auch andere Formen annehmen.

Eine Ausgestaltung des Gegenstands sieht vor, dass der Temperatursensor einer der ersten oder zweiten Ausformung zugeordnet ist, und der Sensor dazu eingerichtet ist, die Temperatur des jeweiligen Endableiters zu ermitteln, wenn sich das Modul auf der Batteriezelle befindet.

Wenn das Modul auf einer Batteriezelle aufgesteckt ist, so befindet sich erste Endableiter in der ersten Ausformung und der zweite Endableiter in der zweiten Ausformung. Der erste und Endableiter nehmen durch Wärmekonvektion jeweils die Temperatur Batteriezelle an.

Sei angenommen, dass der Temperatursensor der ersten Ausformung zugeordnet ist, so kann der Temperatursensor die Temperatur des ersten Endableiters ermitteln, welche ein Maß für die Temperatur der Batteriezelle darstellt.

Beispielsweise kann der Temperatursensor an dem jeweiligen elektrischen Kontakt der zugeordneten Ausformung positioniert werden, so dass der Temperatursensor die Temperatur des entsprechenden elektrischen Kontakts und somit des in jeweiligen Endableiters der Batteriezellen ermitteln kann.

Der Temperatursensor kann beispielsweise auf einem Flansch des ersten jeweiligen elektrischen Kontakts angeordnet sein, wobei der Temperatursensor beispielsweise mit einer Wärmeleitpaste auf diesem Flansch befestigt sein.

Eine Ausgestaltung des Gegenstands sieht vor, dass das Modul eine mit den Mittel zum Abgreifen der Batteriezellenspannung und dem Sensor verbundene Schnittstelle umfasst, die dazu eingerichtet ist, Batteriezelleninformationen, welche Information über die ermittelte Batteriezellentemperatur und Information über die Batteriezellenspannung umfassen, an eine Informationseinheit weiterzuleiten.

Die Schnittstelle ist beispielsweise mit den Mitteln zum Abgreifen der Batteriezellenspannung als auch mit dem Temperatursensor verbunden ist. Die Information über die ermittelte Batteriezellenspannung kann beispielsweise der ermittelte Wert über die Batteriezellentemperatur darstellen oder aber beispielsweise ein Signal, welches eine Abhängigkeit zur ermitteln Batteriezellentemperatur aufweist und aus welchem sich, z.B. durch einen Mikrocontroller, die Batteriezellentemperatur ermitteln lässt. Die Information über die Batteriezellenspannung kann z.B. durch Spannung darstellen, welche zwischen dem ersten und zweiten elektrischen Kontakt anliegt. Die Batteriezelleninformation kann auch noch weitere Informationen umfassen. Diese weiteren Informationen können beispielsweise statische und/oder dynamische Gebrauchsdaten der jeweiligen zugeordneten Batteriezelle umfassen.

Das Modul kann ferner Speichermittel umfassen, welche dazu eingerichtet sind, die Batteriezelleninformationen einzuspeichern und/oder auszulesen. Die Speichermittel können beispielsweise in der Kommunikationseinheit angeordnet sein, und dazu eingerichtet sein, über die Schnittstelle mit der Verarbeitungseinheit Daten auszutauschen.

Beispielsweise kann diese Schnittstelle eine Steck- oder eine Klemmvorrichtung umfassen, welche dazu eingerichtet ist, einen passenden Stecker zur Signalübertragung aufzunehmen, so dass die Übertragung der Batteriezelleninformation über ein Kabel erfolgen kann. Für die Schnittstelle können jedoch auch anderweitige Steckvorrichtungen verwendet werden, die Schnittstelle kann auch Steckdose aufweisen, ferner kann die Schnittstelle auch eine Funkschnittstelle zur drahtlosen Kommunikation mit einer zentralen Informationseinheit darstellen.

Eine Ausgestaltung des Gegenstands sieht vor, dass die Schnittstelle eine Steck- oder eine Klemmvorrichtung umfasst.

Eine Ausgestaltung des Gegenstands sieht vor, dass das Modul eine Kommunikationseinheit umfasst, welche dazu eingerichtet ist, die Information über die Batteriezellenspannung und die Information über die Batteriezellentemperatur zu speichern und über die Schnittstelle zu versenden.

Beispielsweise können mehrere Module über die jeweiligen Schnittstellen miteinander verbunden werden und gegenseitig Batteriezelleninformationen austauschen. Beispielsweise kann ein Modul als Master wirken, während die restlichen Module als Slave wirken, so dass ein Netzwerk zwischen den Modulen aufgebaut werden kann. Mindestens eines der Module des Netzwerkes kann beispielsweise gesammelte Batterieinformationen von mehreren Modulen zu einer zentralen Informationseinheit, wie z.B. der vorstehend erläuterten Verarbeitungseinheit, versenden. Zur Identifikation kann jedem Modul eine eineindeutige Kennung zugeordnet sein, wobei die Batteriezelleninformation auch diese eineindeutige Kennung als Identifikator für die jeweilige Batteriezelle umfassen.

Beispielsweise kann dieser Identifikator eine elektronische Identifikationsnummer darstellen. Diese elektronische Identifikationsnummer kann beispielsweise in Form eines integrierten Schaltkreises in dem Modul integriert sein.

Die erste und zweite Ausformung sind derartig ausgebildet, dass sie jeweils eine Durchführung zum Durchführen des ersten bzw. zweiten Endableiters darstellen, wenn das Modul auf der Batteriezelle platziert ist.

Die erste und zweite Ausformung des Moduls sind beispielsweise durchgehend ausgebildet, so dass eine Durchführung des ersten und zweiten Endableiters durch die jeweilige erste bzw. zweite Ausformung des Moduls erfolgen kann, wenn sich das Modul auf der Batteriezelle befindet. Somit kann jeweils an der Oberseite der ersten Ausformung und der zweiten Ausformung, d.h. an der batterieseitig abgewandeten Seite des Moduls, der jeweilige Endableiter abgegriffen werden, wenn sich das Modul auf der Batteriezelle befindet.

Ferner kann das Modul so ausgelegt sein, dass das Modul im aufgesteckten Zustand mit der Batteriezelle verschraubbar ist. Die erste und zweite Ausformung sind hierbei so ausgestaltet, dass im aufgesteckten Zustand die jeweiligen Endableiter der Batteriezelle durch die Ausformungen über eine batterieseitig abgewandte Oberseite des Moduls hinausragen, so dass beispielsweise jeweils eine Mutter auf jede der hinausragenden Endableiter aufschraubbar ist. Die Endableiter der Batteriezelle können hierzu jeweils ein passendes Gewinde umfassen, welches mit der Mutter zusammenwirkt. Es können jedoch auch andere Schraubverbindungen verwendet werden. Ferner kann diese Schraubverbindung beispielsweise gleichzeitig zur Kontaktierung der Endableiter mit einem elektrischen Verbraucher oder einer Ladeeinrichtung verwendet werden.

Das Modul umfasst eine erste und eine zweite Platte, welche jeweils Ausnehmungen zur Ausbildung der ersten und zweiten Ausformung umfassen, und wobei die Mittel zum Abgreifen der Batteriezellenspannung und der Temperatursensor zwischen der ersten und der zweiten Platte angeordnet sind.

Durch die Verwendung der ersten und zweiten Platte lässt sich das Modul einfach herstellen.

Beispielsweise werden zunächst der erste und der zweite elektrische Kontakt auf der ersten Platte angebracht und der Temperatursensor wird auf der ersten Platten angebracht, und anschließend wird die zweite Platte auf die erste Platte positioniert, so dass die jeweils ersten Ausnehmungen der ersten und zweiten Platte die erste Ausformung des Moduls ausbilden und die jeweils zweiten Ausnehmungen der ersten und zweiten Platte die zweite Ausformung des Moduls ausbilden. Die beiden Platten können beispielsweise verschweisst oder verklebt werden, oder aber auch verschraubt werden, oder beispielsweise komplett mit Kunststoff umspritzt werden.

Die Mittel zum Abgreifen der Batteriezellenspannung umfassen einen ersten elektrischen Kontakt und einen zweiten elektrischen Kontakt umfassen, welche jeweils der ersten und der zweiten Ausformung zugeordnet sind, und wobei die Ausnehmungen in der zweiten Platte eine derartige Größe aufweisen, dass der erste und zweite elektrische Kontakt von der zweiten Platte nicht vollständig verdeckt wird.

Somit wird er jeweilige erste bzw. zweite elektrische Kontakt von den Ausnehmungen in der zweiten Platte nicht vollständig verdeckt wird, so dass der erste und der zweite elektrische Kontakt zu der der Batteriezelle abgewandten Seite zumindest teilweise offen liegen, wenn sich das Modul auf der Batteriezelle befindet.

Beispielsweise können die elektrischen Kontakte ringförmig und die Ausnehmungen der zweiten Platte ebenfalls ringförmig ausgebildet sein, wobei der Durchmesser dieser Ausnehmungen größer als der Innendurchmesser Durchmesser der ringförmig ausgebildeten elektrischen Kontakte ist. Die Form der elektrischen Kontakte und der Ausnehmungen kann jedoch auch andere geeignete Formen darstellen.

Beispielsweise kann das Modul so ausgelegt sein, dass das Modul im aufgesteckten Zustand mit der Batteriezelle verschraubbar ist. Da die Größe der Ausnehmungen der zweiten Platte derart gewählt ist, dass der erste und zweite elektrischen Kontakt von der zweiten Platte nicht vollständig verdeckt wird, kann sich die jeweilige auf den jeweiligen Endableiter aufgeschraubte Mutter auf dem jeweiligen ersten bzw. zweiten elektrischen Kontakt mechanisch abstützen und hierbei neben der mechanischen Verbindung einen sicheren elektrischen Kontakt zwischen den elektrischen Kontakten und dem jeweiligen Endableiter und gewährleisten.

Eine Ausgestaltung des Gegenstands sieht vor, dass der erste und zweite elektrische Kontakt ringförmig ausgebildet sind und die Ausnehmungen der zweiten Platte kreisförmig ausgebildet sind, und wobei der Durchmesser der Ausnehmungen der zweiten Platte größer ist als der Innendurchmesser des ersten und zweiten elektrischen Kontakts.

Eine Ausgestaltung des Gegenstands sieht vor, dass die Verarbeitungseinheit dazu eingerichtet ist, auf Grundlage der empfangenen Batteriezelleninformationen folgendes zu ermitteln: den Batterie- und/oder Ladezustand von mindestens einer Batteriezelle, wobei jede der mindestens einen Batteriezelle einem Modul der Vielzahl von Modulen zugeordnet ist; und/oder statistische Daten der die empfangenen Batteriezelleninformationen zur Ermittlung.

Die Verarbeitungseinheit kann beispielsweise dazu eingerichtet sein, die empfangenen Batteriezelleninformationen zur Ermittlung des Batterie- und Ladezustand der Batteriezellen und/oder des Gesamtbatteriesystems zu verwenden. Beispielsweise kann die Verarbeitungseinheit auch zur Ladung oder Entladung des Gesamtbatteriesystems oder mindestens einer Batteriezelle der Vielzahl von Batteriezellen eingesetzt werden, wobei die Verarbeitungseinheit dazu eingerichtet sein kann, den Lade- bzw. Entladevorgang in Abhängigkeit der empfangenen Batteriezelleninformation durchzuführen. Somit kann eine verbesserte Ladung bzw. Entladung erreicht werden und die Lebensdauer der einzelnen Batteriezellen bzw. des Gesamtbatteriesystems verlängert werden.

Diese statistischen Daten können beispielsweise zur Auswertung für einen optimierten Lade- bzw. Entladevorgang verwendet werden oder auch für andere Zwecke, wie zum Beispiel das Lokalisieren von minderwertigen oder beschädigten Batteriezellen, welche dann gezielt ausgetauscht werden können.

### KURZE BESCHREIBUNG DER FIGUREN

Die Erfindung wird im Folgenden anhand von Ausführungsbeispiele zeigenden Zeichnungen näher erläutert.

Dabei zeigen:
- Fig. 1:: Eine schematische Darstellung einer elektrochemischen Batteriezelle;
- Fig. 2a:: Eine schematische Darstellung einer ersten beispielhaften Ausführungsform eines Moduls;
- Fig. 2b:: Eine schematische Darstellung einer zweiten beispielhaften Ausführungsform eines Moduls;
- Fig. 3:: Eine exemplarische Schraubverbindung für die zweite beispielhafte Ausführungsform eines Moduls;
- Fig. 4a:: Eine schematische Darstellung einer erfindungsgemässen Ausführungsform eines Moduls;
- Fig. 4b:: Eine weitere schematische Darstellung der erfindungsgemässen Ausführungsform eines Moduls;
- Fig. 4c:: Eine weitere schematische Darstellung der erfindungsgemässen Ausführungsform eines Moduls;
- Fig. 4d: Eine weitere schematische Darstellung der erfindungsgemässen Ausführungsform eines Moduls;
- Fig. 5:: Eine schematische Darstellung einer ersten beispielhaften Ausführungsform eines Batteriesystems;
- Fig. 6:: Eine schematische Darstellung einer zweiten beispielhaften Ausführungsform eines Batteriesystems; und
- Fig. 7:: Eine schematische Darstellung einer beispielhaften Ausführungsform eines weiteren Systems.

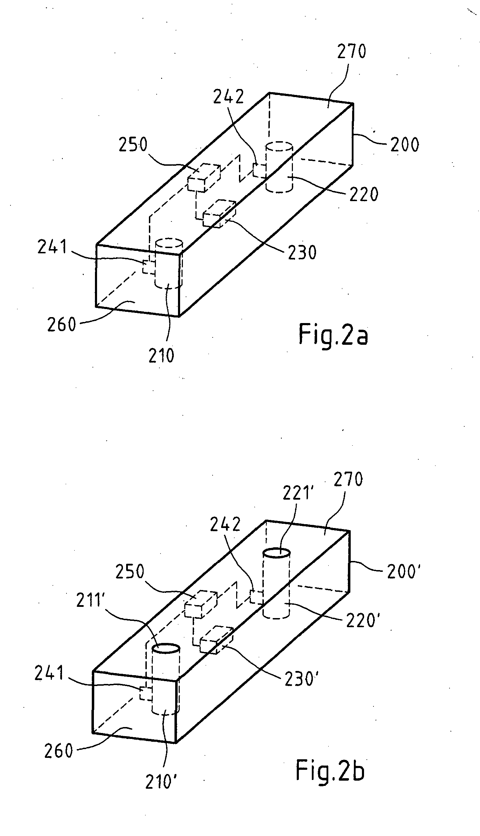

Figur 2a zeigt eine schematische Darstellung einer ersten beispielhaften Ausführungsform eines Moduls 200 zur Abdeckung einer elektrochemischen Batteriezelle 100.

Das Modul 200 umfasst eine erste Ausformung 210 zur Aufnahme eines ersten Endableiters 110 der Batteriezelle 100 und eine zweite Ausformung 220 zur Aufnahme eines zweiten Endableiters 120 der Batteriezelle 100.

Die Form der ersten und zweiten Ausformung muss nicht, wie in der Figur 2a exemplarisch dargestellt, rund sein, sondern kann auch andere Formen aufweisen, wie z.B. rechteckig, oval oder dergleichen. Die erste und zweite Ausformung 210, 220 sind derart ausgebildet, dass sich das Modul 200 als Batteriezellendeckel auf die beiden Endableiter 110, 120 einer elektrochemischen Batteriezelle 100 anbringen lässt, z.B. durch Aufstecken oder Aufschieben.

Des Weiteren umfasst das Modul 200 einen Temperatursensor 230 zur Ermittlung der Batteriezellentemperatur und Mittel 241, 242 zum Abgreifen der Batteriezellenspannung.

Durch die erste und zweite Ausformung 210, 220 lässt sich das Modul 200 sehr einfach auf dem Deckel einer Batteriezelle 100 anbringen, wobei das Modul 200 als Deckel für diese Batteriezelle 100 wirkt und somit einen verbesserten Schutz der Batteriezelle 100 gewährleisten kann. Somit kann eine mechanische Adaption des Moduls 200 auf dem Kopf einer Batteriezelle 100 erfolgen. Das Modul 200 kann beispielsweise aus Kunststoff geformt sein.

Des Weiteren kann der Temperatursensor 230, wenn sich das Modul 200 auf der Batteriezelle 100 befindet, zur Messung der Temperatur der Batteriezelle 100 verwendet werden, da sich in diesem Zustand das Modul 200 und somit auch der Temperatursensor 230 in räumlicher Nähe zur Batteriezelle 100 befindet. Die in Figur 2a gezeigte Position des Temperatursensors 230 stellt nur eine beispielhafte Position desselben dar, der Temperatursensor 230 kann sich auch an einer anderen geeigneten Position im Modul 200 befinden.

Die Mittel 241, 242 zum Abgreifen der Batteriezellenspannung können beispielsweise einen ersten elektrischen Kontakt 241 und einen zweiten elektrischen Kontakt 242 umfassen, welche jeweils der ersten und der zweiten Ausformung 210, 220 zugeordnet sind. Dieser erste und zweite elektrische Kontakt 241, 242 sind dazu eingerichtet, einen elektrischen Kontakt mit dem jeweiligen Endableiter 110, 120 einer Batteriezelle 100 herzustellen, wenn diese Endableiter 110, 120 in der ersten bzw. zweiten Ausformung 210, 220 des Moduls 200 aufgenommen sind. Somit können diese Mittel 241, 242 zum Abgreifen der Batteriezellenspannung zur Ermittlung der Batteriezellenspannung verwendet werden, wenn sich das Modul 200 auf einer Batteriezelle 100 befindet.

Das Modul 200 kann daher Informationen über die ermittelte Batteriezellentemperatur und die über die Batteriezellenspannung bereitstellen, wenn sich das Modul 200 auf einer Batteriezelle 100 befindet. Diese Informationen können beispielsweise zur Information über den Batterie- und Ladezustand der Batteriezelle verwendet werden. Ferner können diese Informationen an ein Batteriemanagement-System weitergeleitet werden und dort beispielsweise für einen verbesserten Ladevorgang mitberücksichtigt werden.

Die Mittel 241, 242 zum Abgreifen der Batteriezellenspannung und der Temperatursensor 230 können fest in dem Modul 200 integriert sein. Somit kann ein besonders guter Schutz der Mittel 241, 242 zum Abgreifen der Batteriezellenspannung und des Temperatursensors 230 erreicht werden.

Das Modul 200 kann eine optionale Schnittstelle 250 aufweisen, die sowohl mit den Mitteln 241, 242 zum Abgreifen der Batteriezellenspannung als auch mit dem Temperatursensor 230 verbunden ist. Diese Schnittstelle 250 kann dazu eingerichtet sein, Batteriezelleninformationen, welche Informationen über die ermittelte Batteriezellentemperatur und die über die Batteriezellenspannung umfassen, an eine zentrale Batterieinformationseinheit weiterzuleiten. Beispielsweise kann diese Schnittstelle 250 eine Steck- oder eine Klemmvorrichtung umfassen, welche dazu eingerichtet ist, einen passenden Stecker zur Signalübertragung aufzunehmen. Für die Schnittstelle 250 können jedoch auch anderweitige Steckvorrichtungen verwendet werden, die Schnittstelle 250 kann auch Steckdose aufweisen, ferner kann die Schnittstelle 250 auch eine Funkschnittstelle zur drahtlosen Kommunikation mit einer zentralen Informationseinheit darstellen.

Des Weiteren kann das Modul 200 auch eine Kommunikationseinheit umfassen, welche dazu eingerichtet ist, die Information über die Batteriezellenspannung und die Information über die Batteriezellentemperatur zu speichern und über die Schnittstelle zu versenden. Beispielsweise können mehrere Module 200 über die jeweiligen Schnittstellen miteinander verbunden werden und gegenseitig Batteriezelleninformationen austauschen. Beispielsweise kann ein Modul 200 als Master wirken, während die restlichen Module 200 als Slave wirken, so dass ein Netzwerk zwischen den Modulen 200 aufgebaut werden kann. Mindestens eines der Module 200 des Netzwerkes kann beispielsweise gesammelte Batterieinformationen von mehreren Modulen 200 zu einer zentralen Informationseinheit versenden. Zur Identifikation kann jedem Modul 200 eine eineindeutige Kennung zugeordnet sein, wobei die Batteriezelleninformation auch diese eineindeutige Kennung als Identifikator für die jeweilige Batteriezelle umfassen.

Die in der Figur 2a dargestellten Ausformungen 210, 220 zur Aufnahme eines ersten Endableiters 110 und eines zweiten Endableiters 120 der Batteriezelle 100 sind nur auf der der Batteriezelle 100 zugewandten Seite 260 des Moduls 200 ausgebildet, während die der Batteriezelle 100 abgewandten Seite 270 des Moduls 200 keine Ausformung zur Aufnahme der Endableiter 110, 120 aufweist. Somit kann das auf die Batteriezelle 100 aufgesteckte Modul 200 eine Isolierung der Endableiter 110, 120 bewirken.

Ferner kann das Modul 200 eine nicht in Figur 2a dargestellte Steckverbindung aufweisen, welche mit elektrischen Kontakten der ersten und zweiten Ausformung 210, 220 verbunden ist, wobei diese Steckverbindung dazu eingerichtet ist, eine elektrische Verbindung mit einem Verbraucher oder einem Ladegerät herzustellen.

Figur 2b zeigt eine schematische Darstellung einer zweiten beispielhaften Ausführungsform eines Moduls 200' zur Abdeckung einer elektrochemischen Batteriezelle 100. Diese zweite beispielhafte Ausführungsform basiert auf der ersten beispielhaften Ausführungsform des in Figur 2a dargestellten Moduls 200, daher gelten die zuvor bezüglich des Moduls 200 erläuterten Ausführungen und Vorteile gleichermaßen für das Modul 200' gemäß der zweiten beispielhaften Ausführungsform.

Das Modul 200' gemäß der zweiten beispielhaften Ausführungsform unterscheidet sich vom Modul 200 gemäß der ersten beispielhaften Ausführungsform in der Ausbildung der ersten Ausformung 210' zur Aufnahme eines ersten Endableiters 110 der Batteriezelle 100 und in der Ausbildung der zweiten Ausformung 220' zur Aufnahme eines zweiten Endableiters 120 der Batteriezelle 100. Die erste und zweite Ausformung 210, 220' des Moduls 200' sind durchgehend ausgebildet, so dass eine Durchführung des ersten und zweiten Endableiters 110, 120 durch die jeweilige erste bzw. zweite Ausformung 210', 220' des Moduls 200' erfolgt, wenn sich das Modul 200' auf der Batteriezelle 100 befindet. Somit kann jeweils an der Oberseite 211', 221' der ersten Ausformung 210' und der zweiten Ausformung 220' der jeweilige Endableiter 110, 120 abgegriffen werden, wenn sich das Modul 200' auf der Batteriezelle 100 befindet.

Ferner kann das Modul 200' so ausgelegt sein, dass das Modul 200' im aufgesteckten Zustand mit der Batteriezelle 100 verschraubbar ist. Die erste und zweite Ausformung 210', 220' sind hierbei so ausgestaltet, dass im aufgesteckten Zustand die jeweiligen Endableiter 110, 120 der Batteriezelle 100 durch die Ausformungen 210', 220' über die Oberseite 270 des Moduls 200' hinausragen, so dass beispielsweise jeweils eine Mutter 310, 320 auf jede der hinausragenden Endableiter 110, 120 aufschraubbar ist, wobei sich die aufgeschraubten Muttern 310, 320 beispielsweise gegen die Oberseite 270 des Moduls 200' abstützen und somit das Modul 200' mit der Batteriezelle 100 befestigen. Die Endableiter 110, 120 können hierzu jeweils ein passendes Gewinde 111, 121 umfassen, welches mit der Mutter zusammenwirkt. Es können jedoch auch andere Schraubverbindungen verwendet werden. Ferner kann diese Schraubverbindung beispielsweise gleichzeitig zur Kontaktierung der Endableiter 110, 120 mit einem elektrischen Verbraucher oder einer Ladeeinrichtung verwendet werden.

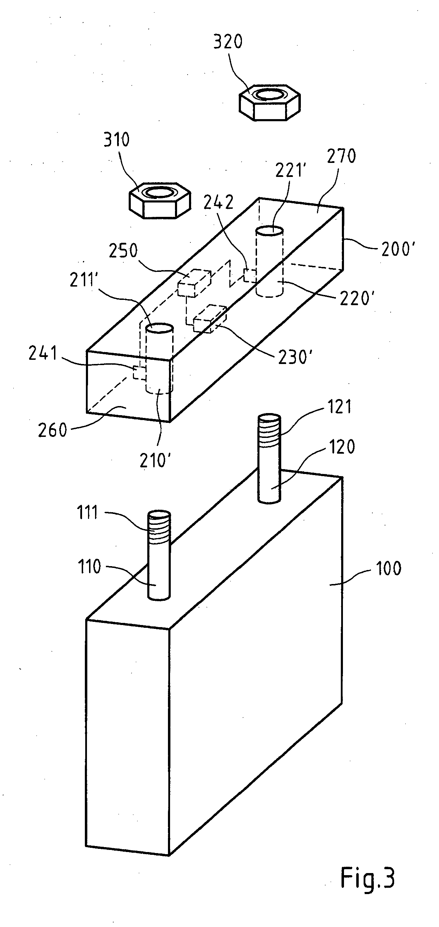

Figur 3 zeigt exemplarisch eine solche Schraubverbindung für das Modul 200' gemäß der zweiten exemplarischen Ausführungsform in Form einer Explosionszeichnung.

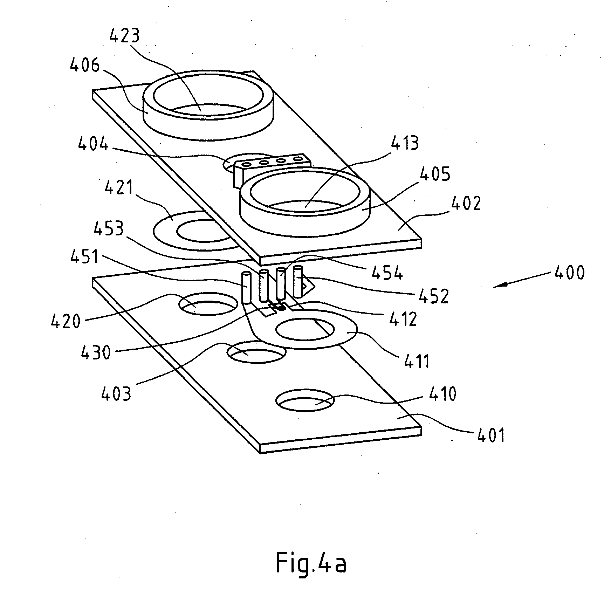

Figur 4a zeigt eine schematische Darstellung einer erfindungsgemässen Ausführungsform eines Moduls 400, wobei dieses Modul 400 in Form einer Explosionszeichnung dargestellt ist. Die zuvor erläuterten Ausführungen für die erste und zweite beispielhafte Ausführungsform eines Moduls 200, 200' gelten gleichermaßen für die erfindungsgemässe Ausführungsform.

Das Modul 400 umfasst eine erste Platte 401 und eine zweite Platte 402, welche jeweils Ausnehmungen 410, 413, 420, 423 für die Ausbildung der ersten Ausformung 210', 220' zur Aufnahme des ersten Endableiters 110 und der zweiten Ausformung 420, 423 zur Aufnahme des zweiten Endableiters 120 ausbilden. Diese Ausnehmungen 410, 413, 420, 423 sind in der Figur 4a kreisförmig ausgebildet. Allerdings können die Ausnehmungen 410, 413, 420, 423 auch eine andere Form aufweisen.

Zwischen der ersten Platte 401 und der zweiten Platte 402 sind die Mittel 411, 421 zum Abgreifen der Batteriezellenspannung und der Temperatursensor 430 angeordnet. Die Mittel 411, 421 zum Abgreifen der Batteriezellenspannung und der Temperatursensor 430 sind somit besonders gut gegen Einflüsse von außen geschützt. Die beiden Platten 401, 402 können beispielsweise aus Kunststoff hergestellt sein und miteinander verschweißt oder verklebt werden.

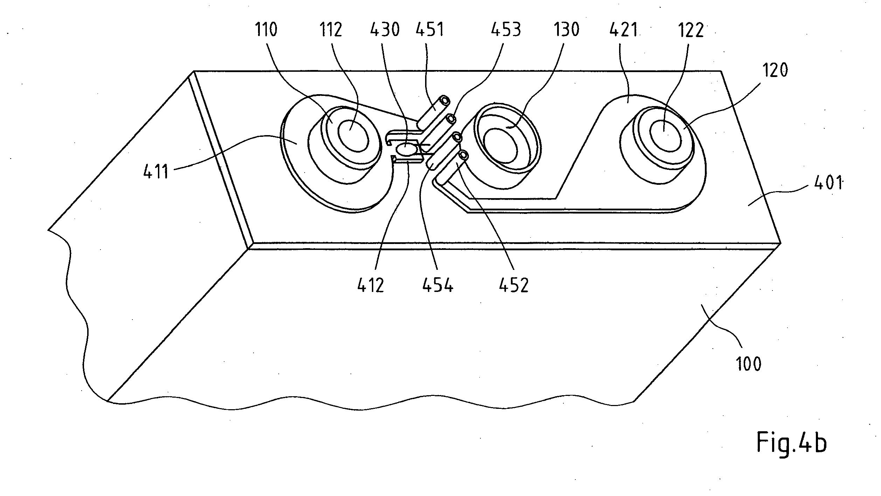

Die Mittel 411, 421 zum Abgreifen der Batteriezellenspannung umfassen einen ersten elektrischen Kontakt 411 und einen zweiten elektrischen Kontakt 412, wobei der erste elektrische Kontakt 411 derart geformt und angeordnet ist, dass er den ersten Endableiter 110 umgibt, wenn sich das Modul 400 auf der Batteriezelle 100 befindet, und wobei der zweite elektrische Kontakt 411 derart geformt und angeordnet ist, dass er den zweiten Endableiter 110 umgibt, wenn sich das Modul 400 auf der Batteriezelle 100 befindet. Dies ist exemplarisch in der in Figur 4b dargestellten Schnittzeichnung gezeigt, welche das Modul 400 ohne die zweite Platte 402 in einem auf die Batteriezelle 100 aufgesteckten Zustand visualisiert. In dieser erfindungsgemässen Ausführungsform sind die elektrischen Kontakte 411 und 412 ringförmig ausgebildet, sie können aber auch andere Formen aufweisen.

Der erste elektrische Kontakt 411 ist mit einem ersten Steckkontakt 451 verbunden und der zweite elektrische Kontakt 421 ist mit einem zweiten Steckkontakt 452 verbunden. Die erste bzw. der zweite elektrische Kontakt 411, 421 kann in Form einer Leiterbahn zur elektrischen Verbindung mit dem jeweiligen Steckkontakt 451, 452 ausgebildet sein.

Der Temperatursensor 430 ist auf einem Flansch 412 des ersten elektrischen Kontakts 411 angeordnet. Beispielsweise kann der Temperatursensor 430 mit einer Wärmeleitpaste auf diesem Flansch 412 befestigt sein. Der erste elektrische Kontakt 411 und dessen Flansch 412 können jeweils einstückig aus einem Metall gefertigt sein. Wenn das Modul 400 auf einer Batteriezelle 100 aufgesteckt ist, so umgibt der erste elektrische Kontakt 411 den ersten Endableiter 110 der Batteriezelle 100, wie beispielhaft in Figur 4b gezeigt, und durch Wärmekonvektion nimmt der erste elektrische Kontakt 411 und auch der Flansch 412 die Temperatur des ersten Endableiters 110 an, welche ein Maß für die Batteriezellentemperatur darstellt. Somit kann der Temperatursensor 430 eine Temperatur messen, welche ein Maß der Batteriezellentemperatur darstellt.

Der Temperatursensor 430 ist mit einem dritten und vierten Steckkontakt 453, 454 verbunden, so dass diese beiden Steckkontakte zusammen mit dem ersten und zweiten Steckkontakt 451, 452 einen Teil einer Schnittstelle 250 bilden, die dazu eingerichtet sein kann, Batteriezelleninformationen, welche Information über die Batterietemperatur und Information über die Batteriezellenspannung umfassen, an eine zentrale Batterieinformationseinheit 710 weiterzuleiten.

Die Steckkontakte 451, 452, 453 und 454 können beispielsweise als Steckhülsen oder aber beispielsweise auch als Stifte ausgebildet sein.

Die Ausnehmungen 410, 420 der ersten Platte 401, d.h. der der Batteriezelle zugewandten Platte 401, weisen eine Form auf, welche der Form des Querschnitts der Endableiter 110, 120 der Batteriezelle entspricht, wobei die Größe dieser Ausnehmungen in etwa der Größe des Querschnitts der stabförmig ausgebildeten Endableiter 110, 120 entspricht. Diese Form ist in der dritten beispielhaften Ausführungsform kreisförmig ausgebildet, kann aber auch hiervon abweichen. Somit kann das Modul 400 beim Aufstecken auf die Batteriezelle 100 durch die Ausnehmungen 410, 420 der ersten Platte 401 passgenau geführt und positioniert werden.

Die Ausnehmungen 413, 424 der zweiten Platte 402, d.h. der der Batteriezelle abgewandten Platte 402, kann ebenfalls die gleiche Form wie die Form des Querschnitts der Endableiter 110, 120 aufweisen, allerdings weisen diese Ausnehmungen 413, 423 der zweiten Platte 402 eine derartige Größe auf, dass der jeweilige elektrische Kontakt 411, 421 von diesen Ausnehmungen 413, 423 nicht vollständig verdeckt wird, sondern zu der der Batteriezelle abgewandten Seite zumindest teilweise offen liegt.

Beispielsweise können diese Ausnehmungen 413, 423 der zweiten Platte 402 kreisförmig ausgebildet sein, wobei der Durchmesser dieser Ausnehmungen 413, 423 größer als der Durchmesser der ringförmig ausgebildeten elektrischen Kontakte 411, 412 ist.

Des Weiteren können die erste Platte 401 und die zweite Platte 402 auch optionale weitere Ausnehmungen 403, 404 umfassen, wie in Figur 4a dargestellt, die z.B. zur Aufnahme von weiteren optionalen Stiften 130 der elektrochemischen Batteriezelle 100 ausgebildet sind, wie beispielhaft in Figur 4b gezeigt.

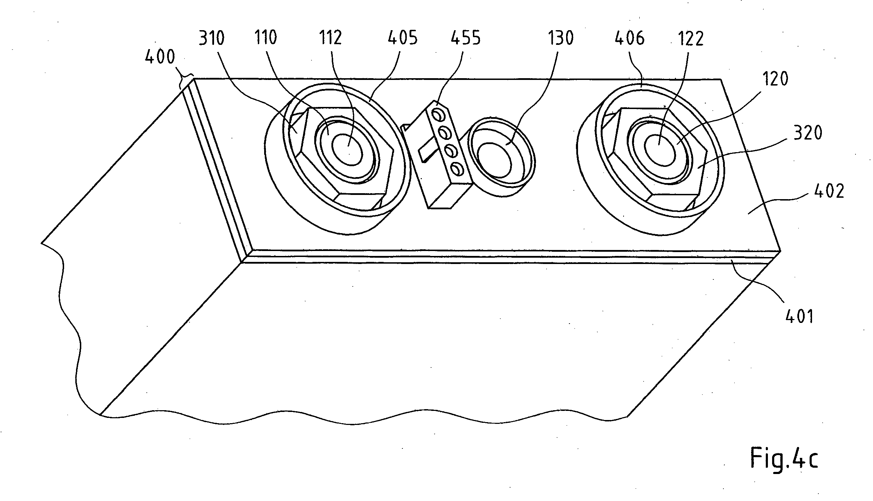

Wie in der Figur 4c dargestellt, welche das Modul 400 gemäß der erfindungsgemässen Ausführungsform aufgesteckt auf einer Batteriezelle 100 zeigt, ragen die jeweiligen Endableiter 110, 120 der Batteriezelle 100 durch die erste Ausformung, welche durch die Ausnehmungen 410 und 413 gebildet wird, und durch die zweite Ausformung, welche durch die Ausnehmungen 420 und 423 gebildet wird, über die Platte 402 des Moduls 400 hinaus. Mit jeweils einer Mutter 310, 320, welche auf die beiden Endableiter 110 und 120 aufgeschraubt werden, kann das Modul 400 auf dem Kopf der Batteriezelle 100 verschraubt werden. Da die Größe der Ausnehmungen 413, 423 größer ist als der Durchmesser elektrischen Kontakte 411 und 421, kann sich die jeweilige aufgeschraubte Mutter 310, 320 auf dem jeweiligen elektrischen Kontakt 411 und 421 mechanisch abstützen und hierbei neben der mechanischen Verbindung einen sicheren elektrischen Kontakt zwischen den elektrischen Kontakten 411 und 421 und dem jeweiligen Endableiter 110 und 120 gewährleisten.

Des Weiteren kann die zweite Platte 402 einen ersten Kranz 405 und einen zweiten Kranz 406 umfassen, wobei der erste Kranz 405 die gedachte Verlängerung der ersten Ausnehmung 413 umgibt und eine Höhe aufweist, dass der erste Endableiter 110 bei aufgestecktem Modul 400 nicht über den ersten Kranz 405 herausragt, und wobei der zweite Kranz 406 die gedachte Verlängerung der zweiten Ausnehmung 423 umgibt und eine Höhe aufweist, dass der erste Endableiter 120 bei aufgestecktem Modul 400 nicht über den ersten Kranz 406 herausragt. Beispielsweise kann die Höhe des ersten und zweiten Kranzes 405, 406 derart gewählt werden, dass bei aufgestecktem Modul 400 die Oberseite des jeweiligen Kranzes 405, 406 mit der Oberseite der Endableiter 110, 120 in einer Ebene liegen.

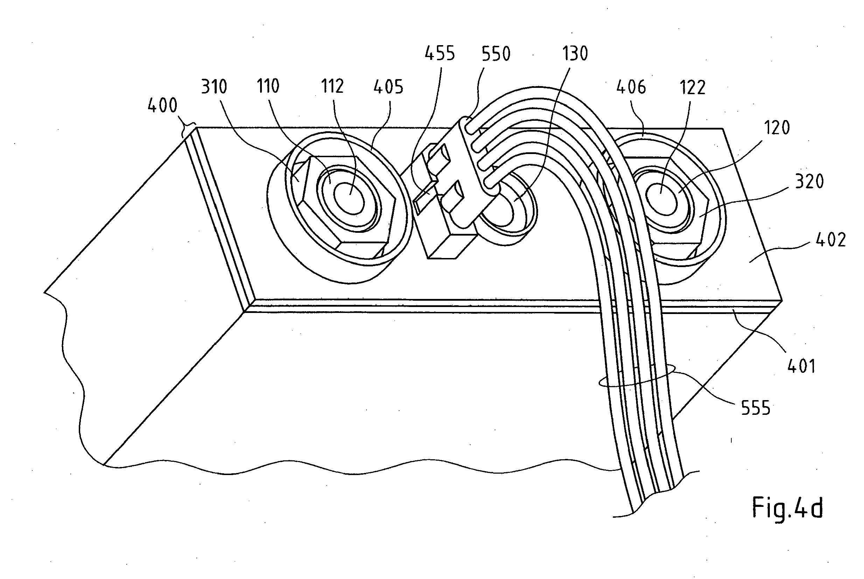

Ferner kann das Modul 400 eine Isolation 455 aufweisen, welche die Steckkontakte 451, 452, 453, 454 umgibt und isoliert. Die Isolation 455 und die Steckkontakte 451, 452, 453, 454 bilden eine Steckvorrichtung, in welche beispielweise der in Figur 4d gezeigte Stecker 550 einsteckbar ist, wobei die Kabel 555 des Steckers 550 die Steckkontakte 451, 452, 453, 454 mit einer (nicht dargestellten) Batterieinformationseinheit zur Verarbeitung der Batterieinformationen verbinden können. Diese Steckvorrichtung kann somit als Schnittstelle zur Übertragung der Batterieinformationen betrachtet werden.

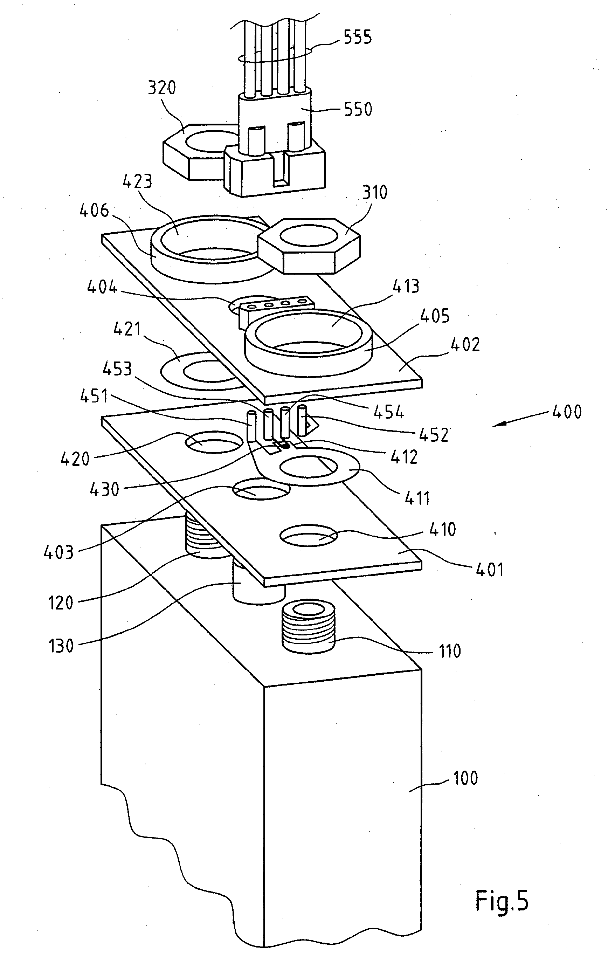

Figur 5 zeigt eine schematische Darstellung einer ersten beispielhaften Ausführungsform eines Batteriesystems 500, welches das Modul 400 gemäß der dritten beispielhaften Ausführungsform, eine elektrochemische Batteriezelle 100, eine erste und zweite Mutter 310, 320 und einen Stecker 550 mit Kabeln 555 umfasst. Die Figur 5 illustriert anhand einer Explosionszeichnung, wie das Modul 400 auf die beiden Endableiter 110 und 120 der Batteriezelle 100 aufgesteckt bzw. darauf angeordnet werden kann, und wie das Modul 400 anhand der Muttern 310 und 320 mit den Endableitern 110 und 120 verschraubt werden kann.

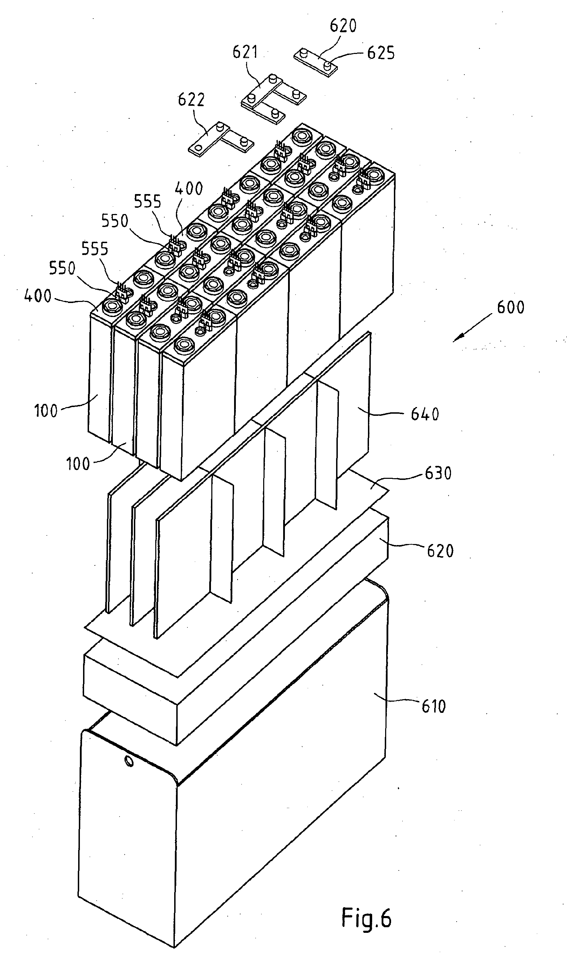

Figur 6 zeigt eine schematische Darstellung einer zweiten beispielhaften Ausführungsform eines Batteriesystems 600 in Form einer Explosionszeichnung.

Dieses System 600 umfasst ein Batteriezellengefäß 610 und eine Vielzahl von elektrochemischen Batteriezellen 100, welche in dem Batteriezellengefäß 610 angeordnet sind. Auf jeder der Batteriezellen 100 ist ein Modul 400 zur Abdeckung einer elektrochemischen Batteriezelle 100 angeordnet.

Die Vielzahl von Batteriezellen 100 werden mit Hilfe eines Gitterelements 640, welches auf einer optionalen Trägerplatte 630 und einem optionalen Bodenelement 620 platzierbar ist, in dem Batteriezellengefäß 610 positioniert. Das optionale Bodenelement 620 kann beispielsweise dämpfende Eigenschaften aufweisen, so dass die Vielzahl von Batteriezellen 100 im Batteriezellengefäß 610 gegen von der Unterseite des Batteriezellengefäß' 610 kommenden Stöße geschützt ist.

Das Modul 400 kann eine derartige Form aufweisen, dass die Form eines Moduls 400 mit der Form des Gitterelements 640 zusammenwirkt und so die Positionierung eines Moduls 400 und der jeweiligen zugeordneten Batteriezelle 100 in dem Gitterelement 640 gewährleistet. Beispielsweise kann das Modul 400 Mittel zur Fixierung des Moduls an dem Gitterelement 640 und/oder dem Batteriezellengefäß 610 aufweisen. Des weiteren können die Module 400 der Vielzahl von Batteriezellen 100 einen integralen Bestandteil des Batteriezellengefäß' 610 darstellen, wenn die Module 400 auf der jeweiligen Batteriezelle 100 montiert sind und in dem Batteriezellengefäß 610 angeordnet sind.

Die Vielzahl von Batteriezellen 100 können beispielsweise mit Stromschienen 620, 621, 622 elektrisch verbunden werden, z.B. in Reihen- oder Parallelschaltung oder einer Kombination hiervon. Hierzu können die Stromschienen 620, 621, 622 beispielsweise Stifte 625 aufweisen, die sich in entsprechende Löcher 112, 122 der Endableiter 110, 120 der Batteriezellen 100 einstecken lassen. Somit kann die Vielzahl von Batteriezellen 100 zu einer Gesamtbatterie zusammengeschaltet werden.

Das Batteriezellengefäß 610 zusammen mit der Vielzahl von Batteriezellen 100 kann beispielsweise für Hybridkraftfahrzeuge, elektrisch betriebene Fahrzeuge wie z.B. Flurförderfahrzeuge, elektrische Fahrräder, elektrische Rollstühle, Golfcarts, Kommunalfahrzeuge, Freizeitfahrzeuge oder dergleichen verwendet werden.

Somit ermöglichen die Module 400, die auf den Batteriezellen 100 angeordnet sind, eine Überwachung der Batteriezellentemperatur und der Batteriezellenspannung jeder einzelnen Batteriezelle 100 der Vielzahl von Batteriezellen 100. Hierzu können beispielsweise Stecker 550 mit jeweiligen Kabeln 555 (nicht vollständig in Figur 6 dargestellt) zur Übertragung der Batterieinformationen, z.B. an eine Verarbeitungseinheit, auf das jeweilige Modul 400 aufgesteckt werden.

Diese Informationen können beispielsweise zur Information über den Batterie- und Ladezustand der Batteriezellen 100 und/oder der Gesamtbatterie verwendet werden. Ferner können diese Informationen an ein Batteriemanagement-System weitergeleitet werden und dort beispielsweise für einen verbesserten Ladevorgang mitberücksichtigt werden. Beispielsweise können diese Information für die Ladung und/oder Entladung der Gesamtbatterie oder mindestens einer Batteriezelle 100 verwendet werden.

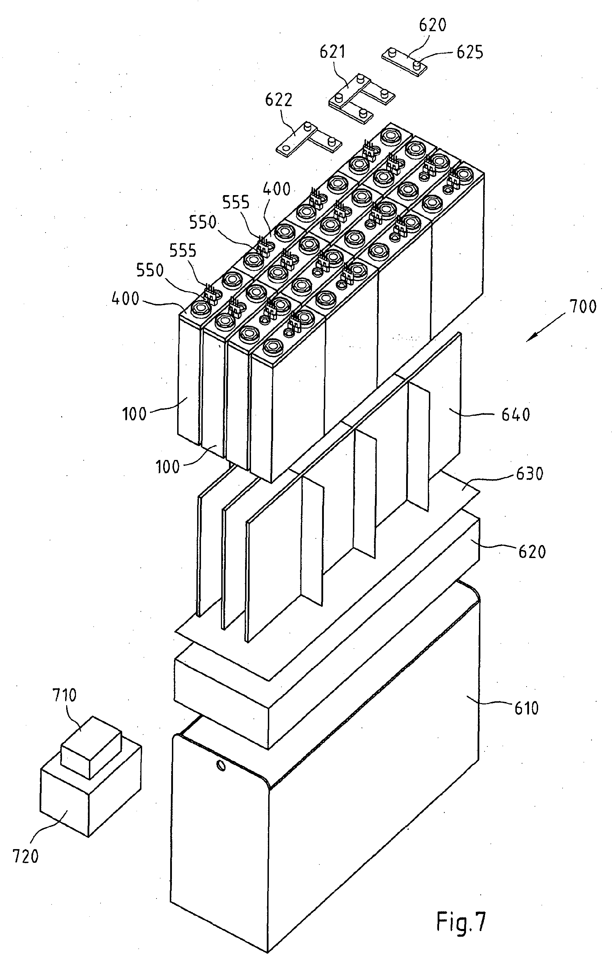

Figur 7 zeigt eine schematische Darstellung einer weiteren beispielhaften Ausführungsform eines Systems 700.

Dieses System 700 umfasst eine Vielzahl von elektrochemischen Batteriezellen 100 und eine Vielzahl von Modulen 400 zur Abdeckung einer elektrochemischen Batteriezelle 100, wobei in Figur 7 das Modul 400 gemäß der erfindungsgemässen Ausführungsform in Verwendung mit dem aus Figur 6 bekanntem Batteriezellengefäß 610 dargestellt ist.

Das System 700 umfasst ferner eine Verarbeitungseinheit 710, welche mit der Vielzahl von Modulen 400 derart verbunden und dazu eingerichtet ist, Batteriezelleninformationen, welche Information über die Temperatur und Information über die Batteriezellenspannung von mindestens einem Modul der Vielzahl von Modulen 400 umfassen, über die Schnittstelle 720 zu empfangen.

Die Verarbeitungseinheit 710 kann beispielsweise dazu eingerichtet sein, die empfangenen Information zur Auswertung des Ladezustandes und/oder des Batteriezustandes der mindestens einen Batteriezelle zu verwenden, wobei jeweils eine dieser mindestens einen Batteriezelle jeweils einem Modul des mindestens einen Moduls zugeordnet ist.

Beispielsweise kann die Verarbeitungseinheit 710 über ein Kabel (nicht in Figur 7 dargestellt) mit der Schnittstelle eines jeden Moduls des mindestens einen Moduls 400 verbunden sein. Das Batteriezellengefäß kann beispielsweise eine separate Steckvorrichtung (nicht in Figur 7 dargestellt) aufweisen, die zum einen mit den Schnittstellen der Vielzahl der Module 400 verbindbar ist, und die zum anderen mit der Schnittstelle 720 der Verarbeitungseinheit 710 verbindbar ist. Somit kann die Verarbeitungseinheit 710 mit einem Kabel mit der Schnittstelle des Batteriezellengefäßes 610 verbunden werden, womit gleichzeitig die Verbindung zu den jeweiligen Modulen 400 hergestellt werden kann. Die Verbindung zwischen Verarbeitungseinheit 710 und der Schnittstelle des Batteriezellengefäßes 610 kann allerdings auch eine Funkverbindung darstellen.

Des Weiteren können einzelne Module 400 auch untereinander verbunden sein und gegenseitig Batteriezelleninformationen austauschen, wie es in der ersten beispielhaften Ausführungsform des Moduls 100 erläutert wurde.

Die Verarbeitungseinheit 710 kann beispielsweise dazu eingerichtet sein, die empfangenen Batteriezelleninformationen zur Ermittlung des Batterie- und Ladezustand der Batteriezellen 100 und/oder der Gesamtbatterie zu verwenden. Beispielsweise kann die Verarbeitungseinheit 710 auch zur Ladung oder Entladung der Gesamtbatterie oder mindestens einer Batteriezelle 100 der Vielzahl von Batteriezellen 100 eingesetzt werden, wobei die Verarbeitungseinheit 710 dazu eingerichtet ist, den Lade- bzw. Entladevorganng in Abhängigkeit der empfangenen Batteriezelleninformation durchzuführen. Somit kann eine verbesserte Ladung bzw. Entladung erreicht werden und die Lebensdauer der einzelnen Batteriezellen 100 bzw. der Gesamtbatterie verlängert werden.

Ferner kann die Verarbeitungseinheit 710 die empfangenen Batteriezelleninformationen auch zur Verarbeitung in statistischen Daten bzw. Auswertung verwenden, wobei diese statistische Auswertung beispielsweise für einen optimierten Lade- bzw. Entladevorgang verwendet werden kann oder auch für andere Zwecke, wie zum Beispiel das Lokalisieren von minderwertigen oder beschädigten Batteriezellen 100, welche dann gezielt ausgetauscht werden können.

## Patentansprüche

1. Modul zur Abdeckung einer elektrochemischen Batteriezelle, insbesondere Lithium-Ionen-Batteriezelle, umfassend:
- eine erste Ausformung zur Aufnahme eines ersten Endableiters der Batteriezelle;
- eine zweite Ausformung zur Aufnahme eines zweiten Endableiters der Batteriezelle;
- Mittel zum Abgreifen der Batteriezellenspannung; und
- einen Temperatursensor zur Ermittlung der Batteriezellentemperatur,
- wobei die erste und zweite Ausformung derartig ausgebildet sind, dass sich das Modul auf die beiden Endableiter durch Aufstecken oder Aufschieben anbringen lässt, und wobei die erste und zweite Ausformung derartig ausgebildet sind, dass sie jeweils eine Durchführung zum Durchführen des ersten bzw. zweiten Endableiters darstellen, wenn das Modul auf der Batteriezelle angebracht ist,
**dadurch gekennzeichnet, dass**
das Modul eine erste und eine zweite Platte umfasst, welche jeweils Ausnehmungen zur Ausbildung der ersten und zweiten Ausformung umfassen, und wobei die Mittel zum Abgreifen der Batteriezellenspannung und der Temperatursensor zwischen der ersten und der zweiten Platte angeordnet sind, und wobei die Mittel zum Abgreifen der Batteriezellenspannung einen ersten elektrischen Kontakt und einen zweiten elektrischen Kontakt umfassen, welche jeweils der ersten und der zweiten Ausformung zugeordnet sind, und wobei die Ausnehmungen in der zweiten Platte eine derartige Größe aufweisen, dass der erste und zweite elektrische Kontakt von der zweiten Platte nicht vollständig verdeckt wird.

2. Modul nach Anspruch 1, wobei die Mittel zum Abgreifen der Batteriezellenspannung und der Temperatursensor in dem Modul integriert sind.

3. Modul nach Anspruch 1 oder 2, wobei die erste Ausformung den ersten elektrischen Kontakt umfasst und der erste elektrische Kontakt derart geformt ist, dass er den ersten Endableiter umgibt, wenn sich das Modul auf der Batteriezelle befindet, und wobei die zweite Ausformung den zweiten elektrischen Kontakt umfasst und der zweite elektrische Kontakt derart geformt ist, dass er den zweiten Endableiter umgibt, wenn sich das Modul auf der Batteriezelle befindet.

4. Modul nach einem der vorangegangenen Ansprüche, wobei der Temperatursensor einer der ersten oder zweiten Ausformung zugeordnet ist, und der Temperatursensor dazu eingerichtet ist, die Temperatur des jeweiligen Endableiters zu ermitteln, wenn sich das Modul auf der Batteriezelle befindet.

5. Modul nach einem der vorangegangenen Ansprüche, umfassend eine mit den Mittel zum Abgreifen der Batteriezellenspannung und dem Temperatursensor verbundene Schnittstelle, die dazu eingerichtet ist, Batteriezelleninformationen, welche Information über die ermittelte Batteriezellentemperatur und Information über die Batteriezellenspannung umfassen, an eine Informationseinheit weiterzuleiten.

6. Modul nach Anspruche 5, umfassend eine Kommunikationseinheit, welche dazu eingerichtet ist, die Information über die Batteriezellenspannung und die Information über die Batteriezellentemperatur zu speichern und über die Schnittstelle zu versenden.

7. Modul nach Anspruch 1, wobei der erste und zweite elektrische Kontakt ringförmig ausgebildet sind und die Ausnehmungen der zweiten Platte kreisförmig ausgebildet sind, und wobei der Durchmesser der Ausnehmungen der zweiten Platte größer ist als der Innendurchmesser des ersten und zweiten elektrischen Kontakts.

8. Batteriesystem, umfassend:
- mindestens eine elektrochemische Batteriezelle, wobei jede der mindestens einen Batteriezelle einen ersten Endableiter und einen zweiten Endableiter umfasst; und
- mindestens ein Modul nach einem der Ansprüche 1 bis 7, wobei jeweils ein Modul des mindestens einen Moduls auf einer Batteriezelle der mindestens einen Batteriezelle derart angeordnet ist, dass die erste Ausformung des jeweiligen Moduls den ersten Endableiter der entsprechenden Batteriezelle aufnimmt und die zweite Ausformung des jeweiligen Moduls den zweiten Endableiter der entsprechenden Batteriezelle aufnimmt.

9. System, umfassend:
- ein Batteriesystem nach Anspruch 8;
- eine Verarbeitungseinheit, welche mit dem mindestens einem Modul des mindestens einen Moduls derart verbunden ist und dazu eingerichtet ist, Batteriezelleninformationen, welche Information über die Temperatur und Information über die Batteriezellenspannung der jeweiligen Batteriezelle des mindestens einen Moduls des mindestens einen Moduls umfassen, zu empfangen.

10. System nach Anspruch 9, wobei die Verarbeitungseinheit dazu eingerichtet ist, auf Grundlage der empfangenen Batteriezelleninformationen den Batterie- und/oder Ladezustand von mindestens einer Batteriezelle zu ermitteln, wobei jede der mindestens einen Batteriezelle einem Modul der Vielzahl von Modulen zugeordnet ist; und/oder die empfangenen Batteriezelleninformationen zur Verarbeitung in statistischen Daten bzw. Auswertung zu verwenden.

11. Verfahren zum Betrieb eines Batteriesystems gemäß Anspruch 8, umfassend:
- Ermitteln der Batteriezellenspannung und der Batteriezellentemperatur von mindestens einer Batteriezelle der mindestens einen Batteriezelle auf Grundlage einer Spannung, die an den Mitteln zum Abgreifen der Batteriezellenspannung des jeweiligen Moduls anliegt, und auf Grundlage eines Signals des Temperatursensors des jeweiligen Moduls.

## Claims

1. Module for covering an electrochemical battery cell, in particular a lithium-ion battery cell, comprising:
- a first moulding to accommodate a first terminal pole of the battery cell;
- a second moulding to accommodate a second terminal pole of the battery cell;
- means for tapping the battery cell voltage; and
- a temperature sensor for determining the battery cell temperature,
- wherein the first and second mouldings are formed in such a way that the module can be attached to the two terminal poles by pushing or sliding it on, and wherein the first and second mouldings are formed in such a way that they each constitute a duct through which the first and second terminal pole respectively can be fed through when the module is attached to the battery cell,
**characterised in that**
the module comprises a first and a second plate, each of which comprise recesses to form the first and second mouldings, and wherein the means for tapping the battery cell voltage and the temperature sensor are positioned between the first and the second plate, and wherein the means for tapping the battery cell voltage comprise a first electrical contact and a second electrical contact, which are associated with to the first and second mouldings respectively, and wherein the recesses in the second plate are of such a size that the first and second electrical contacts are not fully covered by the second plate.

2. Module according to Claim 1, wherein the means for tapping the battery cell voltage and the temperature sensor are integrated in the module.

3. Module according to Claim 1 or 2, wherein the first moulding comprises the first electrical contact and the first electrical contact is shaped in such a way that it surrounds the first terminal pole when the module is situated on the battery cell, and wherein the second moulding comprises the second electrical contact and the second electrical contact is shaped in such a way that it surrounds the second terminal pole when the module is situated on the battery cell.

4. Module according to any one of the preceding claims, wherein the temperature sensor is assigned to one of either the first or the second moulding and the temperature sensor is configured to determine the temperature of the particular terminal pole when the module is situated on the battery cell.

5. Module according to any one of the preceding claims, comprising an interface connected to the means for tapping the battery cell voltage and to the temperature sensor which is configured to forward battery cell information, comprising information about the battery temperature determined and information about the battery cell voltage, to an information unit.

6. Module according to Claim 5, comprising a communication unit which is configured to store the information about the battery cell voltage and the information about the battery cell temperature and to transmit it via the interface.

7. Module according to Claim 1, wherein the first and second electrical contacts are ring-shaped and the recesses in the second plate are circular in shape, and wherein the diameter of the recesses in the second plate is larger than the internal diameter of the first and second electrical contacts.

8. Battery system, comprising:
- at least one electrochemical battery cell, wherein each of the at least one battery cell comprises a first terminal pole and a second terminal pole; and
- at least one module according to any one of Claims 1 to 7, wherein in each case one module of the at least one module is positioned on one battery cell out of the at least one battery cell in such a way that the first moulding of the particular module accommodates the first terminal pole of the corresponding battery cell and the second moulding of the particular module accommodates the second terminal pole of the corresponding battery cell.

9. System, comprising:
- a battery system according to Claim 8;
- a processing unit which is linked to the at least one module out of the at least one module in such a way and configured to receive battery cell information, comprising information about the temperature and information about the battery cell voltage of the particular battery cell of the at least one module out of the modules of which there is at least one.

10. System according to Claim 9, wherein the processing unit is set up to determine the battery condition and/or state of charge of at least one battery cell on the basis of the battery cell information received, wherein each of the at least one battery cell is associated with one module of the plurality number of modules; and/or to use the received battery cell information for processing in statistical data and/or analysis.

11. Method for operating a battery system according to Claim 8, comprising:
- Determination of the battery cell voltage and the battery cell temperature of at least one battery cell out of the at least one battery cell on the basis of a voltage present on the means for tapping the battery cell voltage of the particular module, and on the basis of a signal from the temperature sensor of the particular module.

## Revendications

1. Module destiné à recouvrir une cellule de batterie électrochimique, notamment une cellule de batterie de type lithium-ion, comprenant :
- une première partie conformée servant à recevoir une première extrémité conductrice de la cellule de batterie ;
- une deuxième partie conformée servant à recevoir une deuxième extrémité conductrice de la cellule de batterie ;
- des moyens permettant de prélever la tension de la cellule de batterie ; et
- un capteur de température permettant de déterminer la température de la cellule de batterie,
- la première et la deuxième partie conformée étant réalisées telles que ledit module peut être monté, par emboîtement ou glissement, sur les deux extrémités conductrices, et la première et la deuxième partie conformée étant réalisées telles qu'elles forment chacune un passage permettant d'y faire passer, respectivement, la première et la deuxième extrémité conductrice lorsque ledit module est monté sur la cellule de batterie,
**caractérisé en ce que**
ledit module comprend une première et une deuxième plaque, lesquelles comprennent chacune des évidements destinés à former, respectivement, la première et la deuxième partie conformée, et les moyens qui permettent de prélever la tension de la cellule de batterie ainsi que le capteur de température étant disposés entre la première et la deuxième plaque, et les moyens qui permettent de prélever la tension de la cellule de batterie comprenant un premier contact électrique et un deuxième contact électrique lesquels sont associés, respectivement, à la première et à la deuxième partie conformée, et la dimension des évidements dans la deuxième plaque étant telle que le premier et le deuxième contact électrique ne sont pas complètement recouverts par la deuxième plaque.

2. Module selon la revendication 1, les moyens qui permettent de prélever la tension de la cellule de batterie ainsi que le capteur de température étant intégrés audit module.

3. Module selon la revendication 1 ou 2, la première partie conformée comprenant le premier contact électrique, et le premier contact électrique ayant une forme telle qu'il entoure la première extrémité conductrice lorsque ledit module est monté sur la cellule de batterie, et la deuxième partie conformée comprenant le deuxième contact électrique, et le deuxième contact électrique ayant une forme telle qu'il entoure la deuxième extrémité conductrice lorsque ledit module est monté sur la cellule de batterie.

4. Module selon l'une des revendications précédentes, le capteur de température étant associé à la première ou à la deuxième partie conformée, et le capteur de température étant conçu pour déterminer la température de l'extrémité conductrice concernée, lorsque ledit module est monté sur la cellule de batterie.

5. Module selon l'une des revendications précédentes, comprenant une interface laquelle est reliée aux moyens permettant de prélever la tension de la cellule de batterie ainsi qu'au capteur de température et laquelle est conçue pour transmettre des informations de cellule de batterie, lesquelles comprennent des informations sur la température de cellule de batterie telle qu'elle a été déterminée et des informations sur la tension de cellule de batterie telle qu'elle a été déterminée, à une unité d'information.

6. Module selon la revendication 5, comprenant une unité de communication conçue pour enregistrer l'information sur la tension de cellule de batterie et l'information sur la température de cellule de batterie puis pour les envoyer à travers ladite interface.

7. Module selon la revendication 1, le premier et le deuxième contact électrique étant réalisés sous une forme annulaire, et les évidements de la deuxième plaque étant réalisés sous une forme circulaire, et le diamètre des évidements de la deuxième plaque étant supérieur au diamètre intérieur du premier et deuxième contact électrique.

8. Système de batterie, comprenant :
- au moins une cellule de batterie électrochimique, chacune des cellules de batterie, dont le nombre est au moins égal à un, comprenant une première extrémité conductrice et une deuxième extrémité conductrice ; et
- au moins un module selon l'une des revendications 1 à 7, chacun desdits modules, dont le nombre est au moins égal à un, étant disposé sur une des cellules de batterie, dont le nombre est au moins égal à un, de manière à ce que la première partie conformée du module concerné reçoive la première extrémité conductrice de la cellule de batterie correspondante et la deuxième partie conformée du module concerné reçoive la deuxième extrémité conductrice de la cellule de batterie correspondante.

9. Système, comprenant :
- un système de batterie selon la revendication 8 ;
- une unité de traitement permettant, de par sa liaison à l'au moins un des modules dont le nombre est au moins égal à un, et de par sa conception, de recevoir des informations de cellule de batterie comprenant des informations sur la température et des informations sur la tension de cellule de batterie, et cela pour la cellule de batterie qui est concernée et qui est associée à l'au moins un des modules dont le nombre est au moins égal à un.

10. Système selon la revendication 9, l'unité de traitement étant conçue pour déterminer, sur la base des informations de cellule de batterie qu'elle vient de recevoir, l'état de batterie et/ou de charge d'au moins une cellule de batterie, chacune des cellules de batterie, dont le nombre est au moins égal à un, étant associée à un module parmi la pluralité de modules ; et/ou pour utiliser les informations de cellule de batterie qu'elle vient de recevoir, dans un traitement mettant en oeuvre des données statistiques ou dans une analyse.

11. Procédé permettant de faire fonctionner un système de batterie selon la revendication 8, comprenant :
- la détermination de la tension de cellule de batterie et de la température de cellule de batterie d'au moins une des cellules de batterie dont le nombre est au moins égal à un, en se basant sur une tension telle qu'elle s'applique aux moyens qui permettent de prélever la tension de cellule de batterie et qui appartiennent au module concerné, et en se basant sur un signal émanant du capteur de température du module concerné.
